# EUROPEAN PATENT SPECIFICATION

(11) **EP 1 120 028 B1**
(45) Date of publication and mention of the grant of the patent: **07.06.2006**
(21) Application number: 01200229.1
(22) Date of filing: 23.01.2001
(51) Int. Cl.: A01G 5/04, B65D 85/50

(54) **Apparatus for transporting cut flowers in erect position**
Vorrichtung zur Versendung von Schnittblumen in aufrechter Stellung
Dispositif pour transporter des fleurs coupées en position verticale

(30) Priority: 25.01.2000 NL 1014164
(43) Date of publication of application: 01.08.2001
(73) Proprietor: Zwapak B.V., 1432 GW Aalsmeer (NL)
(72) Inventor: Clarijs, Caroline Maria Johanna, 1431 GD Aalsmeer (NL)
(74) Representative: Prins, Adrianus Willem

(56) References cited:
- WO-A-00/73171
- WO-A-99/57040
- US-A- 3 883 990
- US-A- 4 432 161
- PATENT ABSTRACTS OF JAPAN vol. 1995, no. 09, 31 October 1995 (1995-10-31) -& JP 07 165282 A (INPATSUKU KK), 27 June 1995 (1995-06-27)

## Description

The invention relates to an apparatus for transporting cut flowers in erect position, comprising a nestable and stackable container of plastic material with an inner space surrounded by a bottom and a side wall extending therefrom to an upper side, which inner space is accessible via the upper side to place cut flowers therein in erect position.

Such an apparatus resembling a bucket is generally known and is used for conveying cut flowers from, for instance, a flower auction to a flower shop. The cut flowers are preferably conveyed upright in water so that they prolong their freshness. The cut flowers may be bundled into bunches or bouquets. Such an apparatus is known from WO 99/570 40.

During transport the fragile heads of the flowers must be protected. In order to realize this, the apparatus is of relatively stiff construction, and the walls of the container preferably extend to above the heads of the flowers. As a result, however, when removing the flowers, they must be gripped from above, which increases the risk of damaging the heads.

In practice, it is therefore preferred to extend the side walls of the container to below the heads of the flowers to be transported. In order to protect the flowers, a cardboard box is placed around the container, the side walls of which extend to beyond the heads of the flowers, and the upper side of which can be unfolded. Due to the fact that the side walls of the cardboard box are somewhat flexible they can bend outwards a little during removal of the flowers. This results in a space between the heads of the flowers and the side wall so that when removing the flowers the heads of the flowers can pass and the flowers can be gripped below their heads. This leads to a substantial reduction of the risk of damaging the flowers.

The use of a cardboard box, however, is connected with some drawbacks.

Thus a cardboard box can, in principle, be used only once. This is not only detrimental to the environment, but also leads to an increase in cost for the consumer.

Besides, in an increasing number of countries the conveyer or seller is under the obligation to take back used packages so that the used boxes and buckets are to be transported back. In particular as regards boxes that cannot be reused, this is wasting energy.

Furthermore, the walls of the cardboard boxes are often insufficiently stiff to stack the boxes in several layers, having regard to the relatively large weight of the bucket of flowers filled with water. This involves the risk that during the transport of the cut flowers a large part of a transport volume of, for instance, an airplane or trailer is left unutilized.

The present invention has for its object to remove the above drawbacks while retaining the advantages thereof.

The invention therefore provides an apparatus of the type mentioned in the opening paragraph, characterized in that the side wall is adjustable between a first position in which the side wall of the container is substantially closed and a second position in which the side wall is open near the upper side, such that in the second position the inner space is accessible from the upper side and an upper part of the side wall so as to remove flowers in erect position.

When the adjustable side wall is in the second position, flowers can be placed into or removed from the container. This may avoid damage to the heads, for the inner space of the container is accessible from an upper part of the side wall so that the flowers can be gripped below the heads. When flowers are contained in the container, the adjustable side wall can be set to the first position so that the flowers are protected from the lateral direction by the wall of the container.

In an embodiment of the invention the side wall comprises at least one flap situated near the upper side of the container.

The at least one flap makes the side wall adjustable from a first position to a second position, and vice versa.

In a preferred embodiment the flap is hingedly connected with the container.

This hinged connection of the flap with the container is easy to design. Moreover, the ease of operation of a hinged connection of a flap is great so that changing the position of the flap can take place rapidly. In the first position the flap is in the side wall, and in the second position the flap is outside the side wall.

Preferably, the flap is hingedly connected with the side wall of the container on a substantially horizontal hinge pin, while the flap extends from the hinge pin to the upper side of the container.

Thus the flap can hinge by gravitational force from the first position in the wall to the second position outside the wall, while the inner space of the container at the upper side also becomes accessible from the side.

In a further elaboration of the preferred embodiment the container is provided with locking means for locking the flap in the first position.

With these locking means the flap can be locked in the first position during the transport of flowers. The locking means thus prevent the flap from automatically moving to the second position during the transport.

Preferably, the container is provided at the upper side with stacking means for cooperation with the bottom of a similar apparatus.

In this manner a plurality of these apparatuses can be stacked on top of each other, so that a transport volume can be very efficiently filled with these apparatuses. The stacking means can be adjustable between a stacking position in which they at least partly cover the upper side of the container and a nesting position in which they release the upper side of the container. Thus the apparatus is stackable or nestable, depending on the position of the stacking means.

In an advantageous elaboration of the invention the locking means and the stacking means are integrated.

The effect thus obtained is that the operation of the apparatus can proceed very easily. Thus the locking-stacking means can be in a locking-stacking position during the transport of flowers, an unlocking position during the loading or unloading of flowers, and a nesting position when the apparatus has to be nested.

In a further elaboration the integrated locking-stacking means comprise a frame which is swingably connected with the side wall of the container.

By means of such a frame the locking-stacking means can be realized in a simple cost-saving manner.

In a further elaboration of the preferred embodiment the side walls divergingly extend from the bottom, such that a similar container can be nestingly received in the inner space.

Preferably, at least a part of the inner space situated near the bottom is made liquidproof.

Thus, the container can be partly filled with water to place the flowers therein so that the flowers can absorb water during the transport with the apparatus. When the side walls are of a diverging design, it can be realized that only a relatively small liquid volume is required to fill the container during transport with water to a relatively high altitude from the bottom. This ensures that, while retaining a great certainty of immersion of the lower ends of the stems in water, the apparatus may have a low transport weight.

The invention will now be explained in more detail on the basis of an exemplary embodiment as shown in the drawings, in which:
Fig. 1 is a top plan view of a first exemplary embodiment of the invention;
Fig. 2 is a side view of the exemplary embodiment shown in Fig. 1;
Fig. 3 is a cross-section taken along the lines III-III in Fig. 2;
Fig. 4 is a detail Q of Fig. 2;
Fig. 5 is a perspective view of the exemplary embodiment of Fig. 1 in a second position in which the side wall is open near the upper side;
Fig. 6 is a perspective view of two stacked specimens of the exemplary embodiment shown in Fig. 1;
Fig. 7 is a perspective view of two nested specimens of the exemplary embodiment shown in Fig. 1;
Fig. 8 is a perspective view of a second exemplary embodiment of the invention;
Fig. 9 is a perspective view of a third exemplary embodiment of the invention;
Fig. 10 is a perspective view of a fourth exemplary embodiment of the invention; and
Fig. 11 is a perspective view of a fifth exemplary embodiment of the invention.

In the Figures similar or corresponding parts are designated by the same reference numerals. The Figures are only schematic representations of advantageous embodiments of the invention.

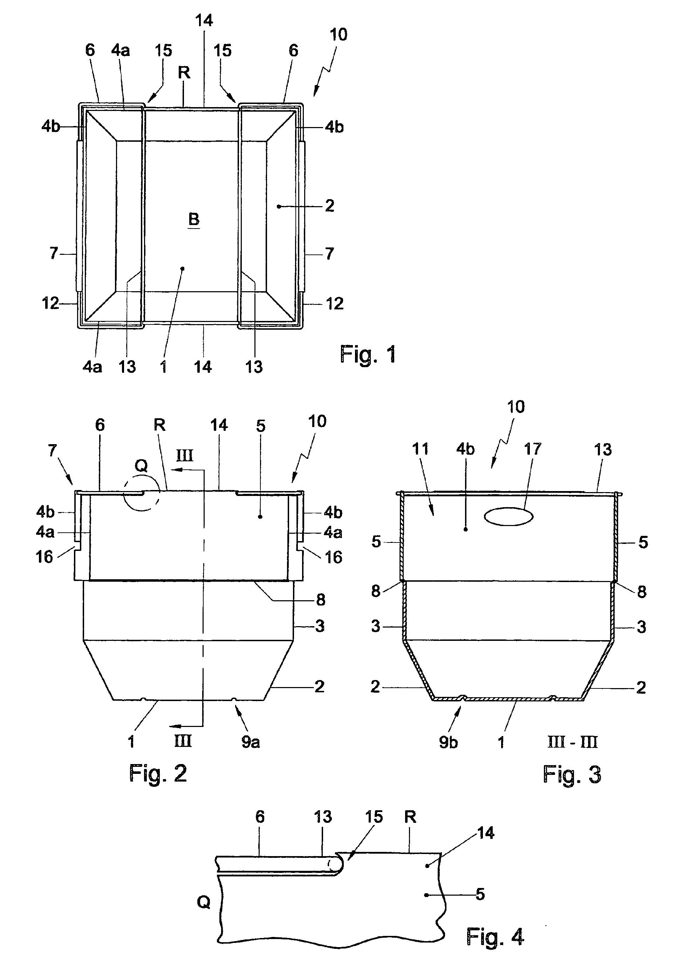

Referring to Figures 1-3, a first exemplary embodiment of the apparatus according to the invention is shown therein, which apparatus will be designated hereinbelow, for brevity's sake, as "flower crate". The flower crate comprises a container 10 of plastic material with an inner space 11 surrounded by a bottom 1 and a side wall Z extending therefrom to an upper side. The side wall Z comprises four lower wall parts 2, four middle wall parts 3 and four upper wall parts 4. The bottom 1 is square. The four lower wall parts 2 are each connected with one of the four sides of the bottom 1, such that they taper to the bottom 1. The middle wall parts 3 are each connected with an edge of a lower wall part 2 directed away from the bottom 1 and extend transversely to the bottom 1. Each middle wall part 3 is connected with an upper wall part 4, such that the side wall Z is stepped.

Provided in two opposite upper wall parts 4A is a flap 5. The flaps 5 are each hingedly connected with an upper wall part 4A on a substantially horizontal hinge pin 8. The flaps 5 extend from the hinge pin 8 to the upper side B of the container 10.

At an edge R directed away from the hinge pin 8 the flaps 5 are each provided with a locking lip 14 extending near the middle of the flap 5. At their free ends the locking lips 14 each carry locking fingers 15.

In Figures 1-3 the flaps 5 are in the first position. In this first position the flaps 5 are each situated in the plane of an upper wall part 4A. In the first position the side wall Z of the container is therefore substantially closed. In this position the inner space 11 of the container 10 is only accessible from the upper side B.

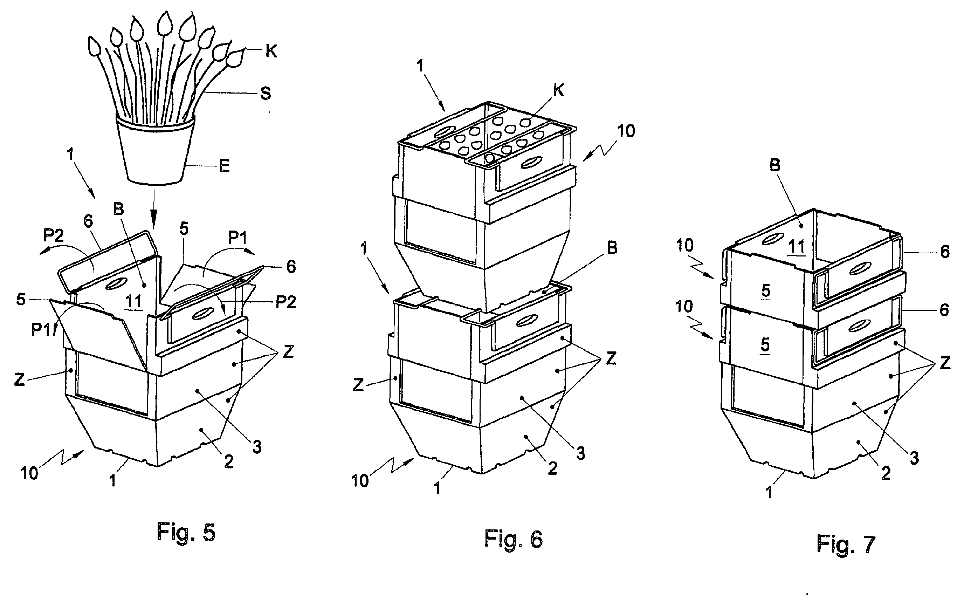

In Figure 5 it is shown that the flaps 5 can be swung with respect to the hinge pin 8 to a second position, in the direction of the arrow P1. In this second position the side wall Z is open near the upper wall parts 4A, such that the inner space 11 is not only accessible from the upper side B, but also from an upper part of the side wall Z, which has been cleared by the swinging out of the flaps 5.

The container 10 is provided with locking means for locking the flaps 5 in the first position. The container 10 is further provided on the upper side B with stacking means for cooperation with the bottom 1 of a similar flower crate. The stacking means and the locking means are integrated and are formed by substantially flat rectangular frames 6 which are swingably connected with the upper part 4B via bearing openings 7. The frames 6 are adjustable between a stacking position in which they at least partly cover the upper side B of the container 10 and a nesting position in which they release the upper side B of the container 10. In the stacking position a supporting part 13 of each frame 6 extends above the inner space 11. The supporting parts 13 cooperate with the locking fingers 15 of the locking lips 14, such that the flaps 5 are locked in the first position and the movement in the direction of the arrow P1 is blocked.

In Fig. 5 it is shown how the frames can be swung from the stacking position to the nesting position, in the direction of the arrow P2, while it is shown in Fig. 7 that the frames 6 are in the nesting position. In that position the supporting parts 13 of the frames 6 can be received in nesting grooves 16, which extend on the outside of the upper wall parts 4B.

Provided on the lower side of the bottom 1 are stacking grooves 9, such that when two flower crates are stacked on top of each other, the supporting parts 13 of the frames 6 of a lower flower crate can each cooperate with a stacking groove 9 of a superjacent flower crate so as to increase the stability of the stack. Preferably, two sets 9A, 9B of two parallel grooves are arranged so as to cross each other, such that the flower crates can be stacked in two different upright orientations.

The upper wall parts 4B are provided with gripping openings 17 so as to facilitate the gripping of the flower crate.

Referring to Figures 5-7, it is shown therein how the flower crate can be used. In Figure 5 it is shown that by swinging the frames 6 to the nesting position, in the direction of the arrow P2, the upper side B and the flaps 5 can be released, and that the flaps 5 can then be swung from the first position to the second position, in the direction of the arrows P1, such that the inner space 11 of the container 10 is accessible from the upper side and from an upper part of the side wall in order to remove therefrom or place therein cut flowers in erect position. In particular during the removal the flowers can be gripped under their heads K from the lateral direction, thus eliminating damage to the heads of the flowers by touching. The flowers can be gripped, for instance at their stems S or at a part of a package located below their heads K. It should be noted that with the flaps in the first position and the frames 6 in the nesting position the flowers can, in principle, already be placed in the container 10.

During transport the side wall of the container 10 is substantially closed, and the heads K of the flowers, which extend to just below the upper side B of the container 10, are protected by the side wall. It should be noted that it is of course possible to provide aeration holes in the side wall Z.

By liquidproofing at least the lower wall parts 2 of the side wall of the flower crate it is realized that during transport the flower crate into which the stems S of the flowers can be placed can be filled with water or another liquid. The effect thus obtained is that the bucket E shown in Fig. 5 can be omitted.

Referring to Fig. 6, it is shown therein that the flower crates can be stacked by cooperation of the supporting parts 13 of the frames 6 in the stacking position of a lower flower crate with the grooves 9 in the bottom 1 of a superjacent flower crate. The frames 6 ensure that the upper flower crate can rest on the upper surface of the lower flower crate, while flowers contained in the flower crate can be sufficiently aerated via the upper side B. In this manner a plurality of flower crates can be stacked on top of each other so that a transport volume of a means of conveyance can be optimally utilized.

When the flower crate is not in use for transporting flowers, the flower crate can be nested into a second flower crate. To this end, as shown in Fig. 7, the frames 6 are set to the nesting position. The inner space 11 of the flower crate is thus accessible from the upper side B to at least partly receive a second flower crate. In this manner a plurality of flower crates can be nested together, thus saving space during storage and/or return transport.

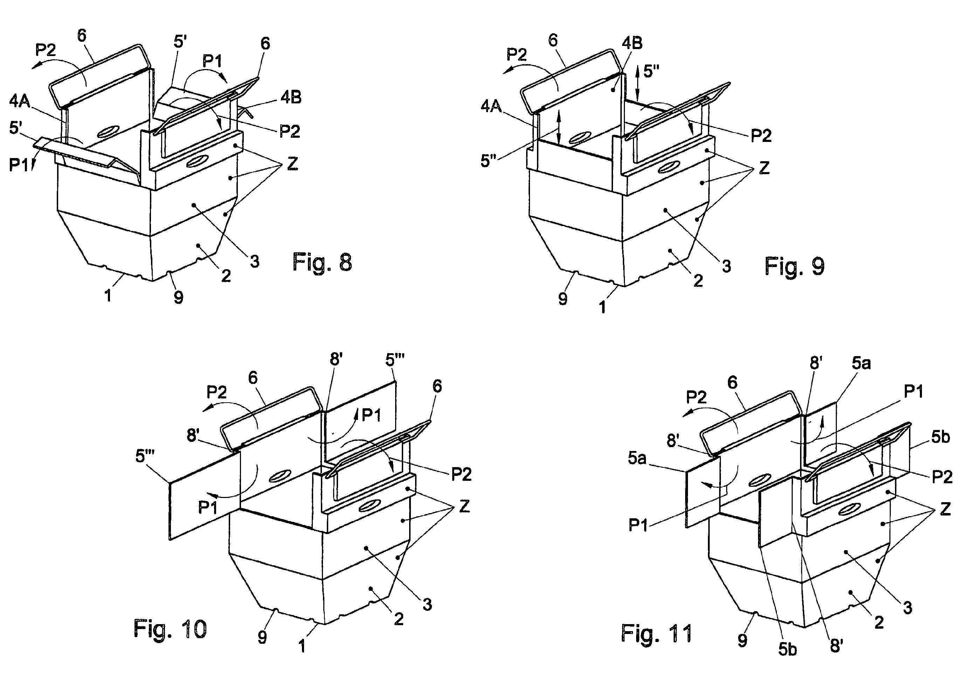

In each of Figures 8-11 an alternative embodiment of the adjustable side wall Z is schematically shown. In Fig. 8 the side wall Z is adjustable by means of articulated flaps 5', which can be swung aside in three parts. In Figure 9 the flaps 5" are slidably connected with the container 10 so that the flaps can sink into the middle wall part 3 so as to make an upper part of the side wall Z accessible from the first position into the second position. In Figure 10 the flaps 5"' are swingably connected with the upper side wall parts 4A on a hinge pin 8' which extends substantially transversely to the bottom 1. A variant thereof is shown in Fig. 11 in which the flap 5" is replaced by two hinged flap parts 5A, 5B.

It may be clear that the invention is not limited to the preferred embodiments described herein, and that many variations are possible.

Thus the flaps may not only be connected with the container by means of a conventional hinge, but the flaps may also form an elastically outwardly bendable part of the side wall. Furthermore, the flaps may be detachably connected with the container.

Besides, the locking means for locking the flaps may be designed in different ways, for instance as slides or hooks which in a locking position engage with the flaps from the container. Also, a detachable connection may be provided between a flap and the container, for instance a Velcro connection, or a flap and the container may be provided with cooperating edge parts which form a connection by cooperation.

Furthermore, the form of the container may not only be angular, but it may also be varied in many ways. Thus, for instance, it may be circular or cylindrical or comprise a combination of circular and angular forms.

The container is made of plastic material since this material can, inter alia, combine a high stiffness with a low weight. It will be clear, however, that parts of the flower crate, such as the pins of the swinging connections and the frames, may be made of another material, for instance metal.

Furthermore, the apparatus may be made stackable or nestable in different ways. In particular, the container may be provided with a detachable cover which provides a supporting surface on which a similar flower crate can be stacked.

Besides, the inner space of the apparatus may be provided with a rack or a grid for supporting flowers or bouquets in erect position in the inner space.

Although the apparatus is particularly suitable for the transport of cut flowers, flowers of a different kind may also be conveyed in erect position in the container.

Such variations will be clear to those skilled in the art and are deemed to be within the scope of the invention as defined in the appended claims.

## Claims

1. An apparatus for transporting cut flowers in erect position, comprising a nestable and stackable container (10) of plastic material with an inner space (11) surrounded by a bottom (1) and a side wall (Z) extending therefrom to an upper side, which inner space is accessible via the upper side to place cut flowers therein in erect position, **characterized in that** the side wall (Z) is adjustable between a first position in which the side wall of the container is substantially closed and a second position in which the side wall is open near the upper side, such that in the second position the inner space (11) is accessible from the upper side (B) and an upper part of the side wall so as to remove flowers in erect position.

2. An apparatus according to claim 1, wherein the side wall (Z) comprises at least one flap (5) situated near the upper side (B) of the container.

3. An apparatus according to claim 2, wherein the flap (5) is hingedly connected with the container.

4. An apparatus according to claim 3, wherein the flap (5) is hingedly connected with the side wall (Z) of the container on a substantially horizontal hinge pin (8), and wherein the flap extends from the hinge pin to the upper side of the container.

5. An apparatus according to any one of claims 2-4, wherein the container is provided with locking means for locking the flap in the first position.

6. An apparatus according to any one of the preceding claims, wherein the container is provided on the upper side with stacking means for cooperation with the bottom of a similar apparatus.

7. An apparatus according to claim 6, wherein the stacking means can be adjustable between a stacking position in which they at least partly cover the upper side of the container and a nesting position in which they release the upper side of the container.

8. An apparatus according to claims 5 and 6 or 7, wherein the locking means and the stacking means are integrated.

9. An apparatus according to claim 8, wherein the integrated locking-stacking means comprise a frame (6) which is swingably connected with the side wall of the container.

10. An apparatus according to any one of the preceding claims, wherein the side walls divergingly extend from the bottom, such that a similar container can be nestingly received in the inner space.

11. An apparatus according to any one of the preceding claims, wherein at least a part of the inner space situated near the bottom is made liquidproof.

## Patentansprüche

1. Vorrichtung zur Versendung von Schnittblumen in aufrechter Stellung, mit einem schachtel- und stapelbaren Behälter (10) aus einem Kunststoffmaterial mit einem Innenraum (11), der von einem Boden (1) und einer Seitenwand (Z), die sich von dort aus zur Oberseite hin erstreckt, umgeben ist, wobei der Innenraum über die Oberseite zugänglich ist, um Schnittblumen darin in einer aufrechten Stellung unterzubringen, **dadurch gekennzeichnet, dass** die Seitenwand (Z) derart zwischen einer ersten Stellung, in der die Seitenwand des Behälters weitgehend geschlossen ist, und einer zweiten Stellung, in der die Seitenwand nahe der Oberseite offen ist, einstellbar ist, dass der Innenraum (11) in der zweiten Stellung von der Oberseite (B) und einem oberen Teil der Seitenwand aus zugänglich ist, um so die Blumen in einer aufrechten Stellung herauszunehmen.

2. Vorrichtung nach Anspruch 1, wobei die Seitenwand (Z) mindestens eine Klappe (5) aufweist, die in der Nähe der Oberseite (B) des Behälters angeordnet ist.

3. Vorrichtung nach Anspruch 2, wobei die Klappe (5) klappbar mit dem Behälter verbunden ist.

4. Vorrichtung nach Anspruch 3, wobei die Klappe (5) an einem weitgehend waagerechten Scharnierbolzen (8) klappbar mit der Seitenwand (Z) des Behälters verbunden ist und wobei sich die Klappe vom Scharnierbolzen bis zur Oberseite des Behälters erstreckt.

5. Vorrichtung nach einem der Ansprüche 2 - 4, wobei der Behälter mit Schließmitteln zum Verriegeln der Klappe in der ersten Stellung versehen ist.

6. Vorrichtung nach einem der vorhergehenden Ansprüche, wobei der Behälter an der Oberseite mit Stapelmitteln für ein Zusammenwirken mit dem Boden einer ähnlichen Vorrichtung versehen ist.

7. Vorrichtung nach Anspruch 6, wobei die Stapelmittel zwischen einer Stapellage, in der sie mindestens teilweise die Oberseite des Behälters abdecken, und einer Schachtelungslage, in der sie die Oberseite des Behälters freigeben, einstellbar sein können.

8. Vorrichtung nach den Ansprüchen 5 und 6 oder 7, wobei die Schließmittel und die Stapelmittel integriert sind.

9. Vorrichtung nach Anspruch 8, wobei die integrierten Schließ-Stapel-Mittel einen Rahmen (6) enthalten, der schwenkbar mit der Seitenwand des Behälters verbunden ist.

10. Vorrichtung nach einem der vorhergehenden Ansprüche, wobei die Seitenwände sich auseinander strebend derart vom Boden aus erstrecken, dass ein ähnlicher Behälter in den Innenraum hinein geschachtelt werden kann.

11. Vorrichtung nach einem der vorhergehenden Ansprüche, wobei mindestens ein Teil des Innenraumes, der in der Nähe des Bodens liegt, flüssigkeitsdicht ausgeführt werden kann.

## Revendications

1. Appareil pour transporter des fleurs coupées dans une position droite, comprenant un conteneur qui peut être emboîté et empilé (10) réalisé en un matériau plastique avec un espace interne (11) entouré par un fond (1) et une paroi de côté (Z) s'étendant depuis celui-là jusqu'à un bord supérieur, lequel espace interne est accessible via le bord supérieur pour placer les fleurs coupées en lui dans une position droite, **caractérisé en ce que** la paroi de côté (Z) est ajustable entre une première position dans laquelle la paroi de côté du conteneur est sensiblement fermée, et une seconde position dans laquelle la paroi de côté est ouverte près du bord supérieur de telle sorte que, dans la seconde position, l'espace interne (11) est accessible depuis le bord supérieur (13) et depuis une partie supérieure de la paroi de côté de sorte à enlever les fleurs en position droite.

2. Appareil selon la revendication 1, dans lequel la paroi de côté (Z) comprend au moins un abattant (5) situé près du bord supérieur (13) du conteneur.

3. Appareil selon la revendication 2, dans lequel l'abattant (5) est relié avec des charnières au conteneur.

4. Appareil selon la revendication 3, dans lequel l'abattant (5) est relié avec des charnières à la paroi de côté (Z) du conteneur sur un gond de charnière sensiblement horizontal (8) et dans lequel l'abattant s'étend du gond de charnière jusqu'au bord supérieur du conteneur.

5. Appareil selon l'une quelconque des revendications 2 à 4, dans lequel le conteneur est muni de moyens de verrouillage pour verrouiller l'abattant dans la première position.

6. Appareil selon l'une quelconque des revendications précédentes, dans lequel le conteneur est muni sur le bord supérieur de moyens de gerbage pour une coopération avec le fond d'un appareil similaire.

7. Appareil selon la revendication 6, dans lequel les moyens de gerbage peuvent être ajustables entre une position de gerbage, dans laquelle ils recouvrent au moins partiellement le bord supérieur du conteneur, et une position d'emboîtement dans laquelle ils libèrent le bord supérieur du conteneur.

8. Appareil selon les revendications 5 et 6 ou 7, dans lequel les moyens de verrouillage et les moyens de gerbage sont intégrés.

9. Appareil selon la revendication 8, dans lequel les moyens de verrouillage - de gerbage intégrés comprennent un cadre (6) qui est raccordé, de manière à pouvoir se balancer, à la paroi de côté du conteneur.

10. Appareil selon l'une quelconque des revendications précédentes, dans lequel les parois de côté s'étendent de manière divergente à partir du fond de telle sorte qu'un conteneur similaire peut être, de manière emboîtable, reçu dans l'espace interne.

11. Appareil selon l'une quelconque des revendications précédentes, dans lequel au moins une partie de l'espace interne située près du fond est réalisée étanche aux liquides.
